# EUROPEAN PATENT SPECIFICATION

(11) **EP 3 354 458 B1**
(45) Date of publication and mention of the grant of the patent: **08.01.2020**
(21) Application number: 18154212.7
(22) Date of filing: 30.01.2018
(51) Int. Cl.: B32B 41/00, B32B 38/18, B60R 13/10

(54) **LAMINATING MACHINE FOR LAMINATING ACRYLIC LICENSE PLATES**
LAMINIERMASCHINE ZUM LAMINIEREN VON ACRYLNUMMERNSCHILDERN
MACHINE DE STRATIFICATION POUR STRATIFIER DES PLAQUES D'IMMATRICULATION ACRYLIQUES

(30) Priority: 31.01.2017 ES 201730111
(43) Date of publication of application: 01.08.2018
(73) Proprietor: INDUSTRIAS SAMAR'T, S.A., 17600 Figueres (Gerona) (ES)
(72) Inventor: SÁNCHEZ CASADEVALL, Enrique, 17600 Figueres (Girona) (ES)
(74) Representative: Munoz Garcia, Antonio

(56) References cited:
- ES-U- 1 080 455
- FR-A1- 3 011 767
- GB-A- 2 322 466
- Unknown: "Alignment Jigs -Tennants UK Ltd", , 22 December 2016 (2016-12-22), XP055477816, Retrieved from the Internet: URL:https://web.archive.org/web/2016122217 5726/http://www.tennantsuk.com/alignment-j igs/ [retrieved on 2018-05-23]

## Description

### OBJECT OF THE INVENTION

As expressed by the title of the present specification, the invention relates to a laminating machine for laminating acrylic license plates which provides the intended function thereof with advantages and features that will be described in detail below and entail a significant improvement over the current state of the art.

More specifically, the object of the invention resides in a hand-operated machine for laminating license plates formed by a transparent acrylic part on the back of which there is adhered a reflective film bearing the characters and signs of the plate, the invention having the particularity of being provided with specific holding and guiding means which seek to immobilize the film so that it is perfectly centered with respect to the acrylic part when the assembly is being inserted between the laminating rollers and throughout the entire laminating process.

### FIELD OF APPLICATION OF THE INVENTION

The field of application of the present invention is encompassed within the sector of the industry dedicated to the manufacture of machines, apparatus and devices for producing license plates, focusing particularly on the field of laminators.

### BACKGROUND OF THE INVENTION

As is known, in the field of license plate production, a laminator is a machine which, provided with rollers, allows attaching the different layers of material forming the plates together by exerting pressure on said layers when they are passed through same.

In the case of acrylic plates, which are the most sought-after today and are formed by a transparent part of said material with at least a reflective film bearing the signs and characters of the plate adhered on the back thereof, the problem that arises stems from the need to have a perimetral border between said part and said reflective film to prevent the introduction of moisture and/or dust or other foreign bodies from being introduced between both elements, which leads to an undesired deterioration of the plate which drastically reduces its aesthetic appearance and service life.

Specifically, if the part made of acrylic material and the reflective film are cut so as to have the same measurement, and therefore the edges of the two elements coincide with one another, said introduction of moisture, dust or foreign bodies carried by the environment between the elements becomes easier, where they would simply accumulate on said edge, normally in the upper portion of the plate that is usually more exposed, either due to any blow or friction that it may receive, causing a minimum separation of the mentioned elements, or to any blow or friction that may simply define a small cavity in which moisture or dust or foreign bodies accumulate, which cavity may become larger in no time until causing a disastrous effect on the plate.

For this reason, the reflective film is made such that it has a dimension somewhat smaller than the acrylic part and such that, during the attachment thereof, while centering the film on the surface of the rear face of the acrylic part, there is a safety perimetral border which prevents the described drawback of an eventual early deterioration.

However, laminating the acrylic part and sheet with different dimensions such that they are centered with respect to one another is a complicated operation to perform with existing laminators since, particularly when inserting the end of both elements between the rollers that press on them to attach them together by lamination, the actual pressure of the rollers pushes the elements, making it almost impossible for the elements to not move unduly with respect to one another and become off-centered. Furthermore, the option of attaching together elements having one and the same dimension and subsequently trimming off the reflective film would entail an increased complexity in plate elaboration, and accordingly an increased economic cost.

The objective of the present invention is therefore to develop a new laminator for this type of acrylic plate solving the problems that have been described in a simple and practical manner, and in reference to the current prior art, it must be pointed out that although different types and models of laminators for license plates are known on the market, the applicant is nonetheless unaware of the existence of any laminator having technical, structural and constitutive features which are identical or similar to the features of the invention herein proposed and claimed.

In that sense, it should be mentioned that several documents describing machines of the type herein disclosed are known, and the most closely related document is patent GB2322466A, which describes an apparatus for assembly of an identification plate comprising a console with an upper surface in which, among other elements for assembly of an identification plate by placing a background and digits, there is contemplated the existence of registration pegs placed in openings which are used as a registration guide to align a clear plastics panel with the background, as well as rollers which enable pressure to be applied to secure the position digits on the backing and to secure the aligned plastics panel to the backing.

However, despite the fact that said patent GB2322466A and other known documents which disclose similar apparatus, such as patent FR3011767A1 or utility model ES1080455U, all refer to devices of the type herein described and have guiding means for the elements to be laminated, none of them comprises said guiding means being configured like those described herein, i.e., specifically provided for guiding two elements to be laminated having different dimensions, such as an acrylic part and a reflective film having a smaller dimension, without them moving with respect to one another during the laminating process, and keeping them centered with respect to one another.

### DESCRIPTION OF THE INVENTION

The laminating machine for laminating acrylic license plates proposed by the invention is configured as a remarkable novelty within its field of application, since the objectives indicated above are specifically and satisfactorily achieved based on its implementation, the characterizing details thereof which make it possible and which distinguish it being conveniently included in the final claims accompanying the present description.

Specifically, as described above the invention proposes a machine, preferably a hand-operated machine, for laminating acrylic license plates, i.e., plates formed by a transparent acrylic part on the back of which there is adhered at least a reflective film bearing the characters and signs of the plate, the machine having the innovative particularity of being provided with specific holding and guiding means which seek to immobilize the reflective film, which has a smaller dimension than the acrylic part, so that it is perfectly centered on the surface thereof when the assembly is being inserted between the laminating rollers and throughout the entire laminating process.

More specifically, said holding and guiding means are made up of a series of guide accessories incorporated in the body of the machine, aligned along one of the sides of the upper base thereof, on which the elements forming the plate are arranged, and on the side of said upper base opposite the side on which the rollers are incorporated, such that said elements, i.e., the acrylic part and the reflective film, can be arranged against them.

Furthermore, at least one of said guide accessories located on the side opposite the rollers is movable through a groove in which it is housed so that it can be moved together with the acrylic part and the film, accompanying them, holding these elements in the step of insertion between the rollers, preventing any unwanted sliding movement between the elements to be laminated.

the described laminating machine for laminating acrylic license plates therefore represents an innovation of structural and constitutive features that were unknown up until now, and these reasons, combined with its practical usefulness, give the invention sufficient grounds for obtaining the exclusive right that is sought.

### DESCRIPTION OF THE DRAWINGS

To complement the description that is being made and for the purpose of aiding to better understand the features of the invention, a set of drawings is attached to the present specification as an integral part thereof in which the following has been depicted with an illustrative and non-limiting character.

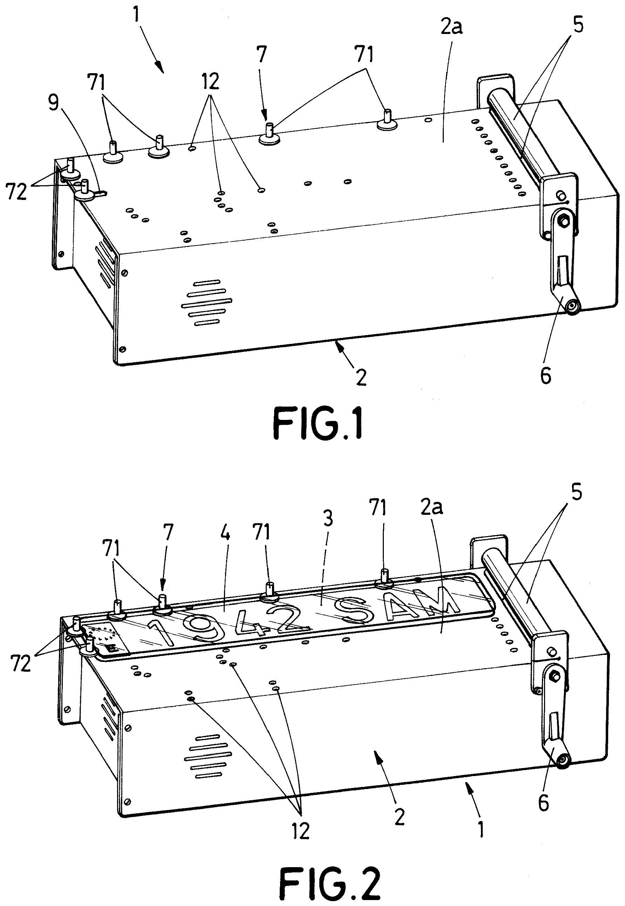

Figure 1 shows a perspective view of an example of the laminating machine for laminating acrylic license plates object of the invention, in which the main parts and elements the invention comprises, as well as the configuration and arrangement thereof, can be seen.

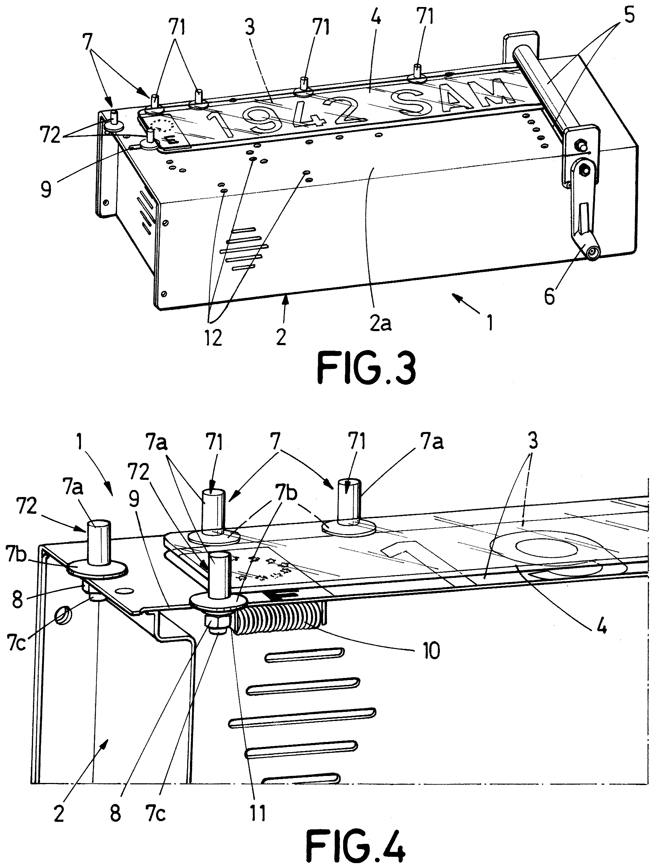

Figures 2 and 3 each shows a perspective view of the machine of the invention according to the example shown in Figure 1, depicted with a plate incorporated thereon, specifically, in the laminating phase in the step before the insertion thereof in the rollers in Figure 2, and in the step of insertion in the rollers in Figure 3.
Figure 4 shows an enlarged section view of a portion of the machine of the invention, also depicted with the plate incorporated thereon, in which the configuration and arrangement of the guide accessories the invention comprises to ensure that lamination is performed with the reflective film centered on the surface of the acrylic part can be seen.

### PREFERRED EMBODIMENT OF THE INVENTION

In view of the mentioned drawings and according to the numbering used therein, a proposed non-limiting example of the laminating machine for laminating acrylic license plates, which comprises the parts and elements indicated and described in detail below, can be seen.

In this sense, as seen in said drawings the laminator (1) in question is formed, as is known, from a prismatic body (2) with an upper base (2a), determining a rectangular surface suitable for incorporating the elements to be laminated consisting of at least an acrylic part (3) arid a reflective film (4), and with rollers (5) located at one of the ends of said upper base (2a), where said elements (3, 4) arranged one on top of another are passed between said rollers for attaching them together, and where said rollers rotate in opposite directions upon actuating same, for example by means of a crank (6) coupled to the shaft of one of said rollers which the machine (1) also has.

Based on this conventional configuration, the machine (1) is distinguished by having holding and guiding means (7) which immobilize the reflective film (4) such that it is centered with respect to the acrylic part (3) having a larger dimension than the reflective film such that said acrylic part (3) protrudes perimeter-wise with respect to the reflective film (4), and keep it in place by guiding both elements without them moving with respect to one another during the laminating process, both while inserting them between the rollers (5), and along almost the entire path traveled by the elements (3, 4) to be laminated through the rollers (5).

Specifically, said holding and guiding means (7) are made up of a series of lateral guide accessories (71) incorporated in the body (2) of the machine, aligned along one of the sides of its upper base (2a), and at least two end guide accessories (72), on the side of the upper base (2a) opposite the side on which the rollers (5) are incorporated, located perpendicular to the lateral guide accessories (71) and parallel to the rollers (5) at a precise distance to enable incorporating the elements (3, 4) to be laminated between these end guide accessories (72) and the rollers (5).

in reference to Figure 4, it can be seen how in the preferred embodiment said lateral guide accessories (71) and end guide accessories (72) are formed by a vertically projecting lug (7a) acting as a stop with the edge of the acrylic part (3) to keep it in the desired position, at the base of which there is a washer-like protruding circular wing (7b) acting as a stop with the edge of the reflective film (4) at a certain distance below the acrylic part (3). Based on the indicated difference in dimension between the reflective film (4) and the acrylic part (3), the dimension of said wing (7a) is the dimension required to keep the reflective film centered on the lower-surface of the acrylic part on which it will be attached when passing between the rollers (5).

Furthermore, it can also be seen in said Figure 4 how, while almost all the guide accessories (71, 72) are fixed to the upper base (2a) of the body (2) of the machine without the possibility of movement by means of nuts (8) screwed onto a threaded rod (7c) which emerges from the lower portion of the accessories, going through holes (12) made on said upper base (2a) for that purpose, at least one of the end guide accessories (72) is movable as it is inserted through a groove (9) in which it moves in order to get closer to the rollers (5) to a greater or lesser extent to continue holding and guiding the acrylic part (3) and the reflective film (4) when they are being inserted, at the opposite end, between the rollers (5).

Preferably, the upper base (2a) has multiple holes (12) for positioning the guide accessories (71, 72) in different locations, depending on the size of the elements to be laminated (3, 4) which will form the plate.

To make the movement of this movable end guide accessory (72) easier, there is associated therewith, through the lower threaded rod (7c) and nut (8) holding it, a spring (10) incorporated in a housing (11) provided to that end under the groove (9), which tends to push it towards the rollers (5), as seen in Figures 3 and 4.

Having sufficiently described the nature of the present invention as well as the way of putting it into practice, it is not considered necessary to further describe the invention so that a person skilled in the art can comprehend the scope thereof and the advantages derived from it, stating that within its essential nature, the present invention could be carried out to practice in other embodiments differing in detail from that indicated by way of example, and such embodiments would also be granted the protection that is sought provided that the fundamental principle thereof is not altered, changed or modified.

## Claims

1. A laminating machine for laminating acrylic license plates, where the license plates consist of at least an acrylic part (3) and a reflective film (4) having a smaller dimension than the acrylic part such that said acrylic part (3) protrudes perimeter-wise with respect to the reflective film (4), and said machine (1) comprising a prismatic body (2) with an upper base (2a), determining a rectangular surface suitable for incorporating the elements (3, 4) to be laminated, and rollers (5) located at one of the ends of said upper base (2a), where said elements (3, 4) arranged one on top of another are passed between said rollers for attaching them together, and where said rollers rotate in opposite directions upon actuating same, for example by means of a crank (6) coupled to the shaft of one of said rollers, having holding and guiding means (7), being incorporated in the body (2) of the machine, aligned along one of the sides of its upper base (2a), and on the side of the upper base (2a) opposite the side on which the rollers (5) are incorporated to enable incorporating the elements (3, 4) to be laminated between these and the rollers (5), wherein said holding and guiding means (7) immobilize a reflective film (4) such that it is centered with respect to an acrylic part (3) having a larger dimension and keep it in place, guiding both elements (3, 4) without them moving with respect to one another during the laminating process, both while inserting them between the rollers (5), and along almost the entire path traveled by the elements (3, 4) to be laminated through the rollers (5); wherein said holding and guiding means (7) are made up of a series of lateral guide accessories (71), incorporated in the body (2) of the machine, aligned along one of the sides of the upper base (2a) thereof, and at least two end guide accessories (72), incorporated on the side of the upper base (2a) opposite the side on which the rollers (5) are incorporated and located perpendicular to the lateral guide accessories (71) and parallel to the rollers (5) at a precise distance to enable incorporating the elements (3, 4) to be laminated between these end guide accessories (72) and the rollers (5); and wherein the lateral guide accessories (71) and end guide accessories (72) are formed by a vertically projecting lug (7a), acting as a stop with the edge of the acrylic part (3) to keep it in the desired position, at the base of which there is a washer-like protruding circular wing (7b) acting as a stop with the edge of the reflective film (4) at a certain distance below the acrylic part (3); where the dimension of said wing (7a) is adjusted to the difference in dimension between the reflective film (4) and the acrylic part (3).

2. The laminating machine for laminating acrylic license plates according to claim 1, **characterized in that** all the guide accessories (71, 72) are fixed to the upper base (2a) of the body (2) of the machine without the possibility of movement, with the exception of at least one of the end guide accessories (72) which is movable as it is inserted through a groove (9) in which it moves in order to get closer to the rollers (5) to a greater or lesser extent.

3. The laminating machine for laminating acrylic license plates according to claim 2, **characterized in that** the end guide accessory (72) which is movable is associated with a spring (10), incorporated in a housing (11) provided to that end under the groove (9), which tends to push it towards the rollers (5).

4. The laminating machine for laminating acrylic license plates according to any of claims 1 to 3, **characterized in that** the upper base (2a) has multiple holes (12) for positioning the guide accessories (71, 72) in different locations, depending on the size of the elements to be laminated (3, 4) forming the plate.

## Patentansprüche

1. Laminiermaschine zum Laminieren von Acrylnummernschildern, wobei die Nummernschilder aus mindestens einem Acrylteil (3) und einem reflektierenden Film (4), welcher eine kleinere Abmessung als dasjenige aufweist, besteht, sodass das genannte Acrylteil (3) aus dem reflektierenden Film (4) umfangsmäßig hervorsteht, und wobei die genannte Maschine (1) einen prismatischen Körper (2) mit einer oberen Grundfläche (2a), welche eine rechteckige Oberfläche bestimmt, welche dazu geeignet ist, die zu laminierenden Elemente (3, 4) aufzunehmen, und Rollen (5), welche sich in einem der Enden der genannten oberen Grundfläche (2a) befinden, umfasst, zwischen welchen die genannten Elemente (3, 4) hindurch geführt werden, übereinander angeordnet, um sie miteinander zu verbinden, und welche sich bei Betätigung in entgegengesetzte Richtungen drehen, zum Beispiel mittels einer Kurbel (6), welche mit der Achse einer derselben gekoppelt ist, mit Befestigungs- und Führungsmittel (7), wobei sie im Körper (2) der Maschine aufgenommen sind, entlang einer der Seiten deren oberen Grundfläche (2a) ausgerichtet, und auf der der oberen Grundfläche (2a) gegenüberliegenden Seite, in welcher die Rollen (5) aufgenommen sind, um zwischen denen und den Rollen (5) die zu laminierenden Elemente (3, 4) aufnehmen zu können, wo die genannten Befestigungs- und Führungsmittel (7) einen reflektierenden Film (4) festklemmen, welcher in Bezug auf ein Acrylteil (3) größerer Abmessung mittig ist, und in seiner Stelle halten, wobei beide Elemente (3, 4) geführt werden, ohne dass sie sich dazwischen während des Laminierprozesses verschieben, sowohl bei Zeitpunkt der Einführung derselben zwischen den Rollen (5) als auch entlang fast des gesamten Weges, welcher von den zu laminierenden Elemente (3, 4) durch die Rollen (5) vollzogen wird; wobei die genannten Befestigungs- und Führungsmittel (7) aus einer Reihe von seitlichen Führungssatelliten (71), welche im Körper (2) der Maschine aufgenommen sind, entlang einer der Seiten dessen oberen Grundfläche (2a) ausgerichtet, und mindestens zwei endständige Führungssatelliten (72), welche auf der gegenüberliegenden Seite der oberen Grundfläche (2a), in welcher die Rollen (5) aufgenommen sind, aufgenommen sind und sich senkrecht zu den seitlichen Führungssatelliten (71) und parallel zu den Rollen (5) mit einem genauen Abstand befinden, um zwischen diesen endständigen Führungssatelliten (72) und den Rollen (5) die zu laminierenden Elemente (3, 4) aufnehmen zu können, gebildet sind; und wobei die seitlichen Führungssatelliten (71) und die endständigen Führungssatelliten (72) aus einem vertikal hervorragenden Stift (7a) gebildet sind, welcher als Anschlag mit dem Rand des Acrylteils (3) agiert, um es in der gewünschten Stellung zu halten, in dessen Grundfläche er einen Flügel (7b) aufweist, in der Art einer kreisförmigen Unterlegscheibe, welche hervorsteht und als Anschlag mit dem Rand des reflektierenden Filmes (4) mit einem bestimmten Abstand unter dem Acrylteil (3) agiert; wobei die Abmessung des genannten Flügels (7a) an den Abmessungsunterschied des reflektierenden Filmes (4) in Bezug auf das Acrylteil (3) angepasst wird.

2. Laminiermaschine zum Laminieren von Acrylnummernschildern nach Anspruch 1, **dadurch gekennzeichnet, dass** alle Führungssatelliten (71, 72) an der oberen Grundfläche (2a) des Körpers (2) der Maschine ohne Bewegungsmöglichkeit fixiert werden, außer mindestens einer der endständigen Führungssatelliten (72), welcher beweglich ist, da er durch eine Nut (9) hindurch eingeführt ist, in welcher er verschoben wird, um sich mehr oder weniger den Rollen (5) anzunähern.

3. Laminiermaschine zum Laminieren von Acrylnummernschildern nach Anspruch 2, **dadurch gekennzeichnet, dass** der endständige Führungssatellit (72), welcher beweglich ist, mit einer Feder (10) assoziiert ist, welche in einer Aufnahme (11) aufgenommen ist, welche zu diesem Zweck unter der Nut (9) vorgesehen ist, welche dazu neigt, denselben zu den Rollen (5) hin zu drücken.

4. Laminiermaschine zum Laminieren von Acrylnummernschildern nach einem der Ansprüche 1 bis 3, **dadurch gekennzeichnet, dass** die obere Grundfläche (2a) mehrfache Löcher (12) aufweist, um die Führungssatelliten (71, 72) in unterschiedlichen Stellen, in Abhängigkeit der Größe der zu laminierenden Elemente (3, 4), welche das Schild bilden, zu platzieren.

## Revendications

1. Machine lamineuse de plaques d'immatriculation acryliques, où les plaques d'immatriculation consistent, au moins, en une pièce acrylique (3) et une pellicule réfléchissante (4) qui a une dimension inférieure à celle précitée de manière que ladite pièce acrylique (3) dépasse périmétralement la pellicule réfléchissante (4), et qui, en comprenant ladite machine (1) un corps (2) prismatique avec une base supérieure (2a), qui détermine une superficie rectangulaire apte à incorporer les éléments (3, 4) à laminer, et des rouleaux (5) situés à une des extrémités de ladite base supérieure (2a), entre lesquels on fait passer lesdits éléments (3, 4) disposés l'un sur l'autre pour les unir entre eux, et qui tournent dans des sens opposés lorsqu'ils sont actionnés, par exemple par le biais d'une manivelle (6) accouplée à l'axe de l'un d'eux, en comptant sur des moyens de serrage et de guidage (7), étant incorporés au corps (2) de la machine, alignés le long d'un des côtés de sa base supérieure (2a), et du côté opposé de la base supérieure (2a) auquel sont incorporés les rouleaux (5) pour pouvoir incorporer entre eux et les rouleaux (5) les éléments (3, 4) à laminer, où lesdits moyens de serrage et de guidage (7) immobilisent une pellicule réfléchissante (4) centrée par rapport à une pièce acrylique (3) de dimension supérieure et la maintiennent à sa place en guidant les deux éléments (3, 4) sans qu'ils se déplacent l'un par rapport à l'autre pendant le procédé de laminage, aussi bien lors du moment de l'insertion de ceux-ci entre les rouleaux (5), qu'au long de presque tout le parcours effectué par les éléments (3, 4) à laminer à travers les rouleaux (5); où lesdits moyens de serrage et de guidage (7) sont constitués d'une série de satellites de guidage latéraux (71), incorporés au corps (2) de la machine, alignés le long d'un des côtés de sa base supérieure (2a), et au moins deux satellites de guidage extrêmes (72), incorporés au côté opposé de la base supérieure (2a) auquel sont incorporés les rouleaux (5) et situés perpendiculairement aux satellites de guidage latéraux (71) et parallèlement aux rouleaux (5) à la distance précise pour pouvoir incorporer entre ces satellites de guidage extrêmes (72) et les rouleaux (5) les éléments (3, 4) à laminer; et où les satellites de guidage latéraux (71) et extrêmes (72) sont conformés par un ergot (7a) émergeant verticalement, qui agit en guise de butée avec le bord de la pièce acrylique (3) pour la maintenir dans la position voulue, à la base duquel il compte sur un aileron (7b) en guise de rondelle circulaire qui dépasse en agissant en guise de butée avec le bord de la pellicule réfléchissante (4) à une certaine distance en dessous de la pièce acrylique (3); où la dimension dudit aileron (7a) est ajustée à la différence de dimension qu'a la pellicule réfléchissante (4) par rapport à la pièce acrylique (3).

2. Machine lamineuse de plaques d'immatriculation acryliques, selon la revendication 1, **caractérisée** en ce tous les satellites de guidage (71, 72) sont fixés à la base supérieure (2a) du corps (2) de la machine sans possibilité de mouvement, sauf, au moins, un des satellites de guidage extrêmes (72) qui est mobile, du fait d'être inséré à travers une rainure (9) dans laquelle il se déplace pour s'approcher plus ou moins des rouleaux (5).

3. Machine lamineuse de plaques d'immatriculation acryliques, selon la revendication 2, **caractérisée en ce que** le satellite de guidage extrême (72) qui est mobile se trouve associé à un ressort (10), incorporé à un logement (11) prévu à cet effet sous la rainure (9), qui tend à le pousser vers les rouleaux (5).

4. Machine lamineuse de plaques d'immatriculation acryliques, selon l'une quelconque des revendications 1 à 3, **caractérisée en ce que** la base supérieure (2a) compte sur de multiples orifices (12) pour positionner les satellites de guidage (71, 72) dans différents emplacements, en fonction de la dimension des éléments à laminer (3, 4) qui conforment la plaque.
